# EUROPÄISCHE PATENTSCHRIFT

(11) **EP 2 678 730 B1**
(45) Veröffentlichungstag und Bekanntmachung des Hinweises auf die Patenterteilung: **28.09.2016**
(21) Anmeldenummer: 12704046.7
(22) Anmeldetag: 09.02.2012
(51) Int. Cl.: G02B 7/183, B32B 17/06, C03B 23/203, G02B 5/18, B32B 3/26, C04B 37/04, C03B 23/20, C04B 37/00

(54) **VERFAHREN ZUR HERSTELLUNG VON LEICHTBAUSTRUKTURELEMENTEN**
METHOD FOR PRODUCING LIGHTWEIGHT CONSTRUCTION STRUCTURAL ELEMENTS
PROCÉDÉ DE FABRICATION D'ÉLÉMENTS STRUCTURAUX LÉGERS

(30) Priorität: 22.02.2011 DE 102011012834
(43) Veröffentlichungstag der Anmeldung: 01.01.2014
(73) Patentinhaber: Fraunhofer-Gesellschaft zur Förderung der angewandten Forschung e.V., 80686 München (DE)
(72) Erfinder: KALKOWSKI, Gerhard, 07743 Jena (DE); RISSE, Stefan, 07749 Jena (DE); EBERHARDT, Ramona, 07751 Bucha (DE)
(74) Vertreter: Pfenning, Meinig & Partner mbB
(86) Internationale Anmeldenummer: PCT/EP2012/052207
(87) Internationale Veröffentlichungsnummer: WO 2012/113651

(56) Entgegenhaltungen:
- DE-A1-102009 011 863
- ANDO D ET AL: "Glass direct bonding technology for hermetic seal package", PROCEEDINGS / MEMS 97 : THE TENTH ANNUAL INTERNATIONAL WORKSHOP ON MICRO ELECTRO MECHANICAL SYSTEMS ; AN INVESTIGATION OF MICRO STRUCTURES, SENSORS, ACTUATORS, MACHINES AND ROBOTS, NAGOYA, JAPAN, JANUARY 26-30, 1997, IEEE SERVICE CENTER, PISCATAWAY,, 26. Januar 1997 (1997-01-26), Seiten 186-190, XP010216902, DOI: 10.1109/MEMSYS.1997.581800 ISBN: 978-0-7803-3744-2
- SAYAH A ET AL: "A NOVEL LOW-TEMPERATURE PRESSURE-ASSISTED BONDING TECHNOLOGY", PROCEEDINGS OF SPIE, SPIE, US, Bd. 4174, 18. September 2000 (2000-09-18), Seiten 363-370, XP001179252, ISSN: 0277-786X, DOI: 10.1117/12.396455
- ZHEN WAN-BAO ET AL: "Single Crystal Si Layers on Glass Fabricated by Hydrophilic Fusion Bonding and Smart-Cut Technology", CHINESE PHYSICS LETTERS, INSTITUTE OF PHYSICS PUBLISHING, BRISTOL, GB, Bd. 21, Nr. 12, 1. Dezember 2004 (2004-12-01), Seiten 2540-2542, XP020027651, ISSN: 0256-307X, DOI: 10.1088/0256-307X/21/12/061
- VIOREL DRAGOI ET AL: "Wafer-level plasma activated bonding: new technology for MEMS fabrication", MICROSYSTEM TECHNOLOGIES ; MICRO AND NANOSYSTEMS INFORMATION STORAGE AND PROCESSING SYSTEMS, SPRINGER, BERLIN, DE, Bd. 14, Nr. 4-5, 20. Oktober 2007 (2007-10-20), Seiten 509-515, XP019591707, ISSN: 1432-1858
- LI Y A ET AL: "Systematic low temperature silicon bonding using pressure and temperature", JPN. J. APPL. PHYS, THE JAPAN SOCIETY OF APPLIED PHYSICS, Bd. 37, Nr. 3A, 15. März 1998 (1998-03-15) , Seiten 737-747, XP008151767, ISSN: 0021-4922, DOI: 10.1143/JJAP.37.737
- SUNI T ET AL: "EFFECTS OF PLASMA ACTIVATION ON HYDROPHOLIC BONDING OF SI AND SIO2", JOURNAL OF THE ELECTROCHEMICAL SOCIETY, ECS, Bd. 149, Nr. 6, 1. Juni 2002 (2002-06-01), Seiten G348-G351, XP008046162, ISSN: 0013-4651, DOI: 10.1149/1.1477209
- AUGENDRE E ET AL: "Direct bonding for silicon photonics", PHOTONICS GLOBAL CONFERENCE (PGC), SINGAPORE, 14-16 DECEMBER 2010, IEEE, 14. Dezember 2010 (2010-12-14), Seiten 1-5, XP031890337, DOI: 10.1109/PGC.2010.5705965 ISBN: 978-1-4244-9882-6
- PÉLISSIERPELISSIER S ET AL: "Fabrication of Buried Corrugated Waveguides by Wafer Direct Bonding", JOURNAL OF LIGHTWAVE TECHNOLOGY, IEEE SERVICE CENTER, NEW YORK, NY, US, Bd. 18, Nr. 4, 1. April 2000 (2000-04-01), XP011029696, ISSN: 0733-8724
- CHRISTIANSEN S H ET AL: "Wafer Direct Bonding: From Advanced Substrate Engineering to Future Applications in Micro/Nanoelectronics", PROCEEDINGS OF THE IEEE, IEEE. NEW YORK, US, Bd. 94, Nr. 12, 1. Dezember 2006 (2006-12-01), Seiten 2060-2106, XP011442826, ISSN: 0018-9219, DOI: 10.1109/JPROC.2006.886026

## Beschreibung

Die Erfindung betrifft ein Verfahren zur Herstellung von Leichtbaustrukturelementen, die als Verbundbauelement mit mindestens einer Deckplatte und einem Trägerelement, die miteinander verbunden sind, hergestellt werden. Die erfindungsgemäß hergestellten Leichtbaustrukturelemente können vorteilhaft für präzisionsmechanische, optische Anwendungen oder als elektrostatische Halteelemente eingesetzt werden. Die einzelnen Elemente der erfindungsgemäßen Leichtbaustrukturelemente bestehen dabei aus einem Glas, bevorzugt auch ULE-Glas mit sehr kleinem thermischen Ausdehnungskoeffizienten, einer Keramik oder Glaskeramik. Bevorzugt sind sie optisch transparent, d.h. für ein größeres Wellenlängenspektrum des sichtbaren Lichts transparent.

Es müssen die Anforderungen einer kleinen Eigenmasse mit einer hohen mechanischen Festigkeit und Steifigkeit in Einklang gebracht werden. Außerdem sollten Spannungen, die in Folge thermischer Wechselbeanspruchung auftreten, beherrscht werden können.

Insbesondere für einen Einsatz erfindungsgemäß hergestellter Leichtbaustrukturelemente im Weltraum sollten auch die dort herrschenden Druckverhältnisse zu berücksichtigt werden können.

Üblicherweise werden für die in Rede stehenden Leichtbaustrukturelemente monolithische Träger eingesetzt, in denen Bohrungen oder Aussparungen ausgebildet sind, um die Eigenmasse zu verringern. Diese können so angeordnet, dimensioniert und ausgerichtet werden, dass sie ein stabiles Tragwerk bilden können. Zur Erhöhung der Stabilität, Festigkeit und Steifheit ist es üblich solche Träger mit plattenförmigen Elementen zu verbinden, mit denen Öffnungen von Durchbrechungen oder Aussparungen verschlossen werden und dadurch auch die Stabilität eines solchen Leichtbaustrukturelements erhöht werden kann.

Dafür werden Träger und ein oder mehrere plattenförmige Elemente stoffschlüssig miteinander verbunden. Da wegen der Temperaturempfindlichkeit Lötverbindungen häufig ausgeschlossen sind und diese auch nicht optisch transparent sind, wurde ein Verbund mit geeigneten Klebstoffen hergestellt. Diese weisen aber erhebliche Nachteile auf. Sie vergrößern den Fügespalt, verändern die optischen Eigenschaften durch Grenzflächenbildung, kriechen bei mechanischer Beanspruchung, weisen eine unterschiedliche thermische Ausdehnung auf, sind hygroskopisch und neigen zu einem Ausgasen bei erhöhten Temperaturen und/oder im Vakuum und Verspröden bei niedrigen Temperaturen. Daher wurde in DE 10 2009 011 863 A1 vorgeschlagen, eine Leichtgewicht-Trägerstruktur unter Anwendung eines Verfahrens, das als anodisches Bonden bezeichnet wird, herzustellen. Die Fügeverbindung von zwei Bauteilen wird dabei bei höheren Temperaturen von ca. 400 °C hergestellt. Gleichzeitig wird ein elektrisches Feld ausgebildet, wodurch im Glas, aus dem die zu verbindenden Teile hergestellt sind, ein Ionentransport erfolgt, der zur Ausbildung der Fügeverbindung führt. Hierfür sind im Glas bewegliche Ionen, insbesondere Na⁺ oder Li⁺ erforderlich. Dadurch ist der Einsatz auf entsprechend geeignete Glassorten begrenzt, in denen solche Ionen enthalten sind. Eine Fügung von reinem Kieselglas, das optisch sehr gute Eigenschaften aufweist, ist daher in dieser Form nicht möglich. Dies trifft auch auf Gläser mit extrem kleinem thermischen Ausdehnungskoeffizienten zu, die aber für viele Anwendungen bevorzugt sind und beispielsweise als Ultra-Low- Expansion-Glas (ULE-Glas) bezeichnet werden.
Bei Werkstoffen oder Materialien, die in elektrischen Feldern polarisiert werden können, können unerwünschte Veränderungen ihrer Eigenschaften hervor gerufen werden. Außerdem erhöht die Ausbildung der erforderlichen elektrischen Felder den Aufwand.
Bei der Herstellung von Leichtgewichtsspiegeln, wie sie in DE 30 18 785 A1 beschrieben ist, soll eine Sinterung von Glas für eine Fügeverbindung eingesetzt werden. Hierfür sind sehr hohe Temperaturen erforderlich und es muss eine Schwindung beim Sintern berücksichtigt werden. Außerdem ist eine Beeinträchtigung der optischen Eigenschaften nicht zu vermeiden.

Eine Technik zum direkten Glas-Bonden ist aus D. Ando et al., "Direct Glass Bonding Technology for Hermetic Seal Package", IEEE, The tenth annual international workshop on micro electro mechanical systems bekannt. Es ist daher Aufgabe der Erfindung, Möglichkeiten für eine kostengünstige Herstellung von Leichtbaustrukturelementen anzugeben, mit denen eine verbesserte Fügeverbindung dauerhaft herstellbar ist und bei denen ggf. erforderliche optische Eigenschaften durch den Fügeprozess nicht oder nur geringfügig beeinträchtigt werden.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der Herstellung von Leichtbaustrukturelementen, als Verbundbauteil werden mindestens zwei Elemente, wobei ein Element ein Trägerelement, an dem mindestens eine Durchbrechung und/oder mindestens eine Aussparung ausgebildet ist, und mindestens ein weiteres Element, das eine Deckplatte ist, miteinander verbunden.
Es werden dabei ein Trägerelement und mindestens eine Deckplatte eingesetzt, die aus einem Glas, einer Glaskeramik, einer Keramik und/oder Silicium mit einer oxidischen Oberflächenschicht, die zumindest im Fügebereich der miteinander zu verbindenden Elemente ausgebildet ist, gebildet sind.

Das Trägerelement soll eine mindestens zweifache Dicke in Bezug zur Dicke einer Deckplatte aufweisen.

In Vorbereitung der Herstellung der Fügeverbindung werden die Oberflächen der miteinander zu verbindenden Deckplatte(n) und des Trägerelements in ihren Fügebereichen so geglättet und poliert, dass dort eine sehr hohe Ebenheit und eine sehr kleine Rauheit der Fügefläche erreicht wird, so dass sie bei einer wirkenden Druckkraft mit mindestens 80 % ihrer Fügefläche in unmittelbarem berührenden Kontakt stehen.

Unmittelbar vor dem eigentlichen Fügen sollte eine intensive Reinigung ggf. mit Plasmaunterstützung zur Ausbildung hydrophiler Oberflächen durchgeführt werden, worauf nachfolgend noch näher einzugehen sein wird.

Bei wirkender Druckkraft, mit der Trägerelement und Deckplatte(n) zusammen gepresst werden, wird eine thermische Behandlung bei einer Temperatur von mindestens 100 °C und maximal 600 °C, bevorzugt unter Vakuumbedingungen durchgeführt. Diese Temperatur wird über einen Zeitraum von mindestens 0,5 h gehalten. Dabei wird eine Fügeverbindung der Deckplatte(n) mit dem Trägerelement hergestellt, ohne dass ein Zusatzwerkstoff erforderlich ist. Es sollten Druckkräfte von mindestens 2 kPa bis zu maximal 5 MPa wirken.

Dabei wird mindestens eine Deckplatte mit einer Oberfläche des Trägerelements verbunden, an der mindestens eine Öffnung einer Durchbrechung oder einer Aussparung angeordnet ist.

Durchbrechungen können bevorzugt durch das Trägerelement von einer Seite an der eine Deckplatte verbunden worden ist, bis zur gegenüberliegenden Seite durch das ganze Trägerelement hindurch geführt sein. Aussparungen können als Sacklochbohrungen oder in Form von Kanälen ausgebildet werden. Die Herstellung kann durch Bohren oder Fräsen in kurzer Zeit und mit geringem Aufwand erfolgen. Nach einer so erfolgten Bearbeitung, die zur Ausbildung von Durchbrechungen und/oder Aussparungen durchgeführt worden ist, können Beschädigungen oder Materialbeeinträchtigungen, insbesondere in Glas und an Rändern, durch nachfolgendes Facettieren und/oder Ätzen mit HF-Säure behutsam abgetragen werden.

Die Ebenheit bzw. Planarität von polierten Flächen kann bevorzugt interferometrisch bestimmt werden. Der Peak to Valley Wert (PV) bestimmt den Abstand zwischen einem höchsten und einem tiefsten Punkt einer Fläche, wenn diese Fläche durch eine Ausgleichsebene approximiert wird.

Die Ebenheit bei der Erfindung sollte besser als 1 µm PV über eine Fläche mit einem Durchmesser von 100 mm für massive Glassubstrate mit einer Dicke > 5 mm aufweisen.

Die Ebenheit bei der Erfindung sollte besser als 10 µm PV über eine Fläche mit einem Durchmesser von 100 mm für dünnere Glassubstrate mit einer Dicke < 5 mm, aber größer als 1 nm aufweisen und
die Ebenheit bei der Erfindung sollte besser als 40 µm PV über eine Fläche mit einem Durchmesser von 100 mm für massive Glassubstrate mit einer Dicke < 1 mm aufweisen.

Vorzugsweise sollte die Ebenheit aber mindestens um einen Faktor 10 besser sein, als die angegebenen Grenzwerte.

Bei größeren zu fügenden Elementen, sollte dies über jeden beliebig gewählten Flächenausschnitt mit einem Durchmesser von 100 mm erfüllt sein.

Bei kleineren Flächen/Elementen sollte dies proportional zum Durchmesser skaliert werden. So sollte beispielsweise bei einer Ronde mit einem Durchmesser von 25 mm, einer Dicke von 10 mm die Ebenheit mindestens 1 µm * 25 mm/100 mm = 250 nm, vorzugsweise besser 25 nm sein.
Die Rauheit der Oberflächen kann mit einem AFM (Atomic Force Microscop) bestimmt werden. Der Root-Mean-Sqare Wert (RMS) bezeichnet den mittleren quadratischen Rauheitswert (Wurzel aus dem Mittelwert der quadratischen Abweichung der Höhen gegenüber einer Ausgleichsebene) über eine Fläche, die typischerweise eine Größe von 1 µm * 1 µm, ggf. auch 10 µm * 10 µm aufweist.

Bei der Erfindung sollte ein Grenzwert von maximal 3 nm RMS eingehalten werden. Bevorzugt sollte dieser Wert mindestens um einen Faktor 5 besser als dieser Grenzwert sein.

Die erforderliche Ebenheit der Fügeflächen bei planaren Körpern oder die zulässige Abweichung von einem Sollradius, bei sphärisch gekrümmten Flächen, die miteinander verbunden werden sollen, hängt daher von der Dicke des jeweiligen Elements ab. Als Faustregel kann man festhalten, dass bei kleinerer Dicke diese Anforderungen geringer sind, da die flexible Verformbarkeit dann größer ist, bevor es zu einem Bruch kommt. Allein oder zusätzlich dazu kann die erforderliche Ebenheit mit steigender Dicke der jeweiligen Deckplatte vergrößert oder die zulässige Abweichung der Oberfläche von einem Sollradius einer Deckplatte mit steigender Dicke der jeweiligen Deckplatte verringert werden.

Bei sphärischen Fügeflächen sollen die beiden miteinander zu verbindenden Oberflächen entsprechend gut miteinander übereinstimmen. Der maximale Spalt bei der Berührung sollte nicht größer als der entsprechende Wert für ebene planare Fügeflächen mit gleicher Ausdehnung (Fläche) und Wandstärke (Dicke) sein.

Für das Glätten/Einebnen können verschiedene Verfahren, wie sie bei der Herstellung mikromechanischer Elemente, insbesondere solcher optischen Elemente bereits eingesetzt werden, angewendet werden. Neben einfachem Polieren und/oder Läppen mit geeigneten Läpp- oder Poliermitteln kann auch ein chemisch mechanisches Polieren (chemical mechanical polishing CMP) eingesetzt werden, wie dies bei der Herstellung von Halbleiterbauelementen üblich ist.

Das Fügen sollte bevorzugt bei einer Temperatur von mindestens 200 °C, bevorzugt von ca. 250 °C durchgeführt werden. Dabei kann eine Druckkraft im Bereich 2 kPa bis 5000 kPa, insbesondere im Bereich 1000 kPa bis 2000 kPa beim Fügen auf die miteinander zu fügenden Elemente ausgeübt werden. Während der Heizphase der Wärmebehandlung sollten bis zum Erreichen der maximalen Fügetemperatur Druckkräfte ausgeübt werden, die bei 50 % der genannten Druckkräfte liegen. Nach Erreichen der maximalen Temperatur kann der Druck dann auf die maximalen Druckkraftwerte erhöht werden. Die thermische Behandlung zum Fügen der Deckplatte(n) mit dem Trägerelement oder auch weiteren Elementen sollte bevorzugt unter Vakuumbedingungen oder in einer inerten Atmosphäre durchgeführt werden.

Die Elemente eines Leichtbaustrukturelements, die miteinander verbunden werden sollen, können aus einem Material, das ausgewählt ist aus Siliciumdioxid (Kieselglas),
einem anderen Glas oder einer Glaskeramik, insbesondere mit einem thermischen Ausdehnungskoeffizienten < 1 * 10⁻¹/K bei Raumtemperatur,
einer Keramik, die ausgewählt ist aus Al₂O₃/Saphir, AlN, SiC, Yttrium-Aluminium-Granat Y₃Al₅O₁₂, Yttrium-Vanadat YVO₄, anderen Granaten und Vanadaten, die insbesondere für Laseranwendungen auch mit mit Seltenerden dotiert sein können oder nichtlinearen optischen Kristallen (LiB₃O₅, LiNbO₃, KTiOPO₄ Kalium-Titanyl-Phosphat), hergestellt sein. Dabei können die Elemente aus jeweils gleichem Material bestehen. Werden unterschiedliche Materialien für die zu fügenden Elemente eingesetzt, sollten die Abweichungen der thermischen Ausdehnungskoeffizienten so klein gehalten sein und die Fügetemperatur so niedrig sein, dass beim Abkühlen auf Raumtemperatur kein Bruch entstehen kann.

Die zu fügenden Elemente sollten neben den beschriebenen geometrischen Voraussetzungen (sehr große Ebenheit, bzw. Übereinstimmung in der Form der zu fügenden Oberflächen und extrem geringe Rauheit) eine sehr hohe Sauberkeit aufweisen.

Die Reinigung von miteinander zu verbindenden Oberflächenbereichen der Elemente sollte zunächst mit organischen Lösungsmitteln und danach mit destilliertem Wasser oder de-ionisertem Wasser in Verbindung mit chemischen Zusätzen und einer Schallunterstützung erfolgen. Dabei sollten Schallwellen im Megaherzfrequenzbereich eingesetzt werden. Im Anschluss an die Reinigung mit Wasser kann eine Plasmabehandlung, die mit Sauerstoff, Stickstoff und einem inerten Gas oder einem Gasgemisch davon, als Plasmagas durchgeführt wird, durchgeführt werden. Stickstoff ist dabei bevorzugt.

Bei der Reinigung kann auf die aus der Halbleitertechnik bekannten Verfahren und Standards, beispielsweise unter dem Oberbegriff RCA-Cleaning (Standard Clean 1) zurück gegriffen werden. Für eine solche Reinigung können insbesondere wässrige alkalische Lösungen (NH₄OH) und Wasserstoff-Peroxid-Lösungen (H₂O₂) eingesetzt werden. Diese können bei der Reinigung alternierend eingesetzt werden. Die Reinigung kann dabei im Tauchverfahren oder mit Flüssigkeitsstrahl auf einem Rotationstisch durchgeführt werden.

Durch die Reinigung sollten sämtliche Verunreinigungen, also Poliermittelreste, organische Rückstände, metallische und anorganische Verunreinigungen entfernt werden.

Dieser Reinigungszustand ist bei den angegebenen Temperaturen <600°C ggf. noch nicht ausreichend zum Direkten Fügen/Bonden, weil die Oberflächen selbst bei Lagerung in geschützter Umgebung durch kleinste Schwebstoffe/Partikel, organische Dämpfe aus der Umgebungsluft (z.B. Lösemittel oder ausgasende Plastikverpackungen etc.) sehr schnell wieder (unsichtbar) verunreinigt werden können. Bereits Monolagen von Kohlenwasserstoffen können schädlich sein.

Daher sollte unmittelbar (mindestens < 3 h besser < 1h) vor dem Bondvorgang in einer Reinraumumgebung hoher Qualität (ISO 4 oder besser) eine weitere Feinreinigung und Aktivierung der Fügeflächen durchgeführt werden.

Dabei wird zunächst eine wässrige, chemisch unterstützte Reinigung der Fügeflächen, in Anlehnung an das bekannt RCA-Verfahren für Si-Wafer in der Halbleiterindustrie, durchgeführt. Hierbei werden (alkalische) NH₄OH-Lösungen (Ammoniak, ca. 2-4 Masse-% in DI-Wasser) im Wechsel mit HO₂-Lösungen (Wasserstoff-Peroxid ca. 2-4 Masse-% in DI-Wasser) verwendet. Vorzugsweise werden diese Lösungen abwechselnd (jeweils ca. 2 Minuten) als Strahl über die Fügeflächen gespült, während die zu reinigenden Teile auf einem Rotationstisch rotieren (ca. 300-2000 Umdreh/min), um gelöste Partikel durch Zentrifugalkraft sofort nach außen weg zu schleudern.

Danach erfolgt ein Spülgang mit destilliertem oder wenigstens deionisiertem (DI) Wasser, möglichst ebenfalls unter Rotation und möglichst mit Schallunterstützung im Megahertzbereich (Megasonic cleaning). Abschließend werden die zu fügenden Elemente trockengeschleudert oder mit reinstem Stickstoff trocken geblasen.

Der gesamte Vorgang kann ggf. mehrfach wiederholt werden. Auch kann bereits die Einwirkung der chemischen Lösungen auf die Glasoberflächen unter Megaschallunterstützung erfolgen.

Nach der Feinreinigung erfolgt eine PlasmaAktivierung der Fügeflächen im N₂-, O₂-Plasma oder auch Edelgas-Plasma (z.B. Argon oder sogar Wasserstoff/Edelgasgemisch), wobei N₂- Plasma bevorzugt wird. Eine Behandlung im Niederdruck-Plasma (bei Drücken zwischen ca. 0,01 mbar und 100 mbar, vorzugsweise ca. 0,3 mbar) wird bevorzugt. Es ist aber auch eine Behandlung bei Normaldruck (ca. 1 atm) möglich.

Eine Plasmabehandlung kann im Vakuum bei den genannten Drücken über einen Zeitraum zwischen 10 s bis 300 s, bevorzugt 60 s durchgeführt werden. Das erforderliche elektrische Wechselfeld sollte eine Leistung zwischen 0,1 W/cm² bis 10 W/cm², bevorzugt ca. 1 W/cm², der zu reinigenden Fläche aufweisen.

Unmittelbar nach der Plasmabehandlung sollte nochmals ein Spülvorgang mit reinem Wasser und Schallunterstützung, bevorzugt im Megahertz-Bereich durchgeführt werden, um eine mit OH-Gruppen gesättigte hydrophile Oberfläche in den Fügeflächenbereichen zu erreichen. Das jeweils zu reinigende Element kann dabei ebenfalls auf einem Rotationstisch angeordnet sein und wie bei der Reinigung rotieren. Sofort nach einer Trocknung, bevorzugt durch Schleudern (Rotation mit großer Drehzahl), sollen die miteinander zu verbindenden Elemente aufeinander gelegt und dann die Fügeverbindung hergestellt werden.

Dadurch wird eine mögliche Kontamination an den zu fügenden Oberflächenbereichen mit festen Partikeln oder gasförmigen Verbindungen vermieden.

Zum Fügen werden die getrockneten Elemente durch geeignetes Anpressen im Bereich der Fügeflächen in engen mechanisch Kontakt gebracht. Dies kann grundsätzlich an Luft oder im Vakuum erfolgen. Bevorzugt ist ein Vakuum/Unterdruck von < 10 mbar, besonders bevorzugt < 10⁻³ mbar.

Im angepressten Zustand wird der Verbund gleichmäßig erwärmt (Heizrate ca. 5-10 K/min) und für eine gewisse Zeit bei einer Temperatur im Bereich von etwa 100 °C bis 600 °C, vorzugsweise etwa 250°C gehalten. Die Dauer der Wärmebehandlung kann mit zunehmender HalteTemperatur reduziert werden. Sie sollte für eine Halte-Temperatur von 250 °C etwa 1/2 Stunde bis 24 Stunden, vorzugsweise etwa 4 Stunden betragen. Bei der thermischen Behandlung zum Fügen sollte die Temperatur gleichmäßig bis auf eine Maximaltemperatur erhöht werden und dabei bereits geringere Druckkräfte ausgeübt werden, als dies nach Erreichen der maximalen Fügetemperatur der Fall ist.

Die Anpresskraft, mit der die zu fügenden Elemente, insbesondere bei Elementen aus einem Glas, bei erhöhter Temperatur gegeneinander gepresst werden, sollte etwa zwischen 2 kPa und 2 MPa liegen, maximal aber 5 MPa betragen, um das Risiko von Spannungen/Verzerrungen in den zu fügenden Elementen oder gar Beschädigungen zu vermeiden bzw. zumindest in tolerierbaren Grenzen zu halten.

Die Anpresskraft sollte ausreichend groß sein, um die zu fügenden Elemente auf ihrer gesamten Fügefläche in engen mechanischen Kontakt zu bringen. Dies erfordert bei perfekt ebenen Flächen einen sehr geringen Druck, u.U. reicht unter Vakuumbedingungen schon die Eigenmasse des aufliegenden Elements aus.

Bei dünnen Deckplatten (Glaswafern) ist die Ebenheit gewöhnlich durch die Elastizität der Elemente fertigungsbedingt eingeschränkt. Zwar wird zunächst während des doppelseitigen Läppens und Polierens ein ebener Zustand herbeiführt, danach können aber Verbiegungen aufgrund von inneren Spannungen wieder zum Vorschein kommen.

Das Ergebnis ist häufig eine wellige Oberfläche, die sich aber unter hinreichendem Anpressdruck auf eine ebene Gegenfläche (Lochplatte) anschmiegen lässt.

Zu vermeiden ist eine Biegebelastung der Glasplatten, die die (besonders kritische) Zugfestigkeit des Materials überschreitet. Hierzu kann es erforderlich sein, durch nachgiebige (elastische Unterlagen) zwischen zu fügenden Elementen und Druckstempeln eine gleichmäßige (flächige) Druckkraftverteilung auf die zu fügenden Elemente zu erreichen, ohne dass lokale Überhöhungen der Biegespannung in den Elementen durch Formabweichungen gegenüber den Druckstempeln auftreten.

Diese Unterlagen können, z.B. nachgiebige/weiche Folien aus expandiertem Graphit oder evtl. auch aus temperaturbeständigem Kunststoff (PTFE) sein.

Nach Ablauf der Haltezeit bei maximaler Temperatur zum Fügen, sollte der Anpressdruck aufgehoben (oder zumindest stark vermindert) und die Temperatur wieder langsam auf Raumtemperatur gesenkt werden.

Die Handhabung der Elemente (vom Reinigen und Plasma-Aktivieren bis zum Aufeinanderlegen) soll so erfolgen, dass die Fügeflächen zwischendurch nicht berührt oder anderweitig verunreinigt werden können.

Mit dem erfindungsgemäßen Verfahren können Elemente sukzessive gefügt und auch Leichtbaustrukturelemente hergestellt werden, bei denen mindestens zwei Trägerelemente mit mindestens einer, bevorzugt dann aber mindestens zwei Deckplatten verbunden werden.

Es besteht außerdem die Möglichkeit, mindestens eine Deckplatte mit einer optisch wirksamen Oberflächenstruktur mit dem Trägerelement zu verbinden. Allein oder zusätzlich dazu kann mindestens ein optisches Element mit mindestens einer Deckplatte verbunden werden.

Dabei kann die Strukturierung der Oberfläche so erfolgen, dass Bereiche die konkav oder konvex gewölbt sind, vorhanden sind. Diese Bereiche können so angeordnet sein, dass sie an Durchbrechungen im Trägerelement angeordnet sind, so dass elektromagnetische Strahlung durch die Deckplatte(n) und die Durchbrechungen des Trägerelements hindurch geführt werden kann. Mit solchen Strukturierungen kann eine Fokussierung oder Kollimierung der Strahlung erreicht werden. Es kann auch mindestens eine Fresnelstruktur vorhanden sein.

An Deckplatten können auch weitere optische Elemente fixiert werden. Dies kann mit einem analogen Verfahren für die Herstellung des Verbundes durch Fügen, wie es für die Verbindung zwischen Deckplatte(n) und Trägerelement bereits beschrieben worden ist, erreicht werden. So kann beispielsweise mindestens ein optisches Prisma an einer Deckplatte an einer Oberfläche fixiert werden, die der Oberfläche an der die jeweilige Deckplatte mit dem Trägerelement verbunden worden ist oder verbunden, wird gegenüber liegt.

Mindestens eine Oberfläche des Trägerelements und die Oberfläche der Deckplatte, die an dieser Oberfläche verbunden werden soll, können nicht nur eben und planar, sondern auch sphärisch gekrümmt sein. Dabei ist eine Oberfläche konkav und die jeweils andere Oberfläche konvex gekrümmt. Bei der Druckkraftausübung zum Fügen kann dann mit geeigneten Werkzeugen gearbeitet werden, die ebenfalls entsprechend gekrümmte Oberflächen aufweisen. Es kann auch ein elastisch verformbares Element, z.B. eine Matte aus PTFE oder einer Folie aus expandiertem Graphit (SGL Group, Carbon SE, Wiesbaden), zwischen einem Druckstempel, mit dem die Druckkraft ausgeübt werden kann, und einer Deckplatte eingelegt werden.

Mit geradlinigen Aussparungen, die im Trägerelement und/oder in einer Deckplatte ausgebildet sind, kann ein optisches Gitter hergestellt werden. Die parallel zueinander und in vorgebbarem Abstand zueinander angeordneten Aussparungen können bevorzugt in einer Oberfläche einer Deckplatte und/oder dem Trägerelement ausgebildet sein, die bevorzugt in das Innere des Leichtbaustrukturelements weist.

Soll ein erfindungsgemäß hergestelltes Leichtbaustrukturelement für optische Anwendungen eingesetzt werden, sollten die miteinander verbundenen optisch transparenten Elemente und dementsprechend, das gesamte durchstrahlte Leichtbaustrukturelement, eine Transmission von mindestens 60 % bei mindestens einer Wellenlänge innerhalb des Wellenlängenbereichs zwischen 110 nm und 11 µm, bevorzugt im Wellenlängenbereich des sichtbaren Lichts aufweisen, und dabei die Transmission mit der/den hergestellten Fügeverbindung(en) um maximal 5 %, bevorzugt maximal 2 % gegenüber der Summe der einzelnen Elemente reduziert sein.

Mit der Erfindung können neben optisch wirksamen Leichtbaustrukturelementen auch andere Elemente hergestellt werden. Für die Herstellung elektrostatischer Halteelemente kann beispielsweise eine Oberfläche einer ersten Deckplatte mit einer dünnen elektrisch leitenden Beschichtung versehen werden. Durch Anwendung lithografischer Technik oder mittels Masken kann dies in strukturierter Form erfolgen. Oberflächen, die Fügebereiche mit dem Trägerelement darstellen, können danach mit zum Fügen geeigneten Dünnschichten, wie z.B. SiO₂, Al₂O₃ mit einer Schichtdicke von ca. 1 nm bis 100 nm versehen werden. Diese Beschichtungen können mit bekannten CVD- oder PVD-Verfahren ausgebildet werden. So kann beispielsweise eine 50 nm dicke metallische Cr-Schicht durch Sputtern ausgebildet werden und danach eine 30 nm dicke Al₂O₃-Schicht darauf durch Sputtern ausgebildet werden. Die elektrisch leitende Verbindung kann seitlich am Rand oder durch das Trägerelement hindurch hergestellt und eine Kontaktierung erreicht werden.

Eine elektrisch leitende Metallschicht kann auch durch eine Oxidation der Oberfläche für das Fügen eines Dielektrikums durch das beschriebene Verfahren vorbereitet werden.

Auf der dem Trägerelement gegenüberliegenden Oberfläche einer ersten Deckplatte, kann dann ein dielektrisches Element, mit einem analog durchführbaren direkten Fügen (Bonden) fixiert werden, um die elektrostatische Wirkung und die Festigkeit anpassen zu können. Dessen nach außen weisende Oberfläche kann ebenfalls strukturiert sein, wie es bei elektrostatischen Halteelementen bereits bekannt ist.

Analog können beispielsweise ein Trägerelement und eine Deckplatte aus elektrisch zumindest geringfügig leitfähigem oxidiertem Silicium, wie bereits beschrieben, verbunden werden. Auf der Deckplatte kann dann ein plattenförmiges Element aus einem Glas, z.B. Pyrex 7740, wie es von der Firma Corning kommerziell erhältlich ist, und das einen ähnlichen thermischen Ausdehnungskoeffizienten, wie Silicium aufweist, befestigt werden. Auch in diesem Fall kann, wie vorab beschrieben der Fügeverbund hergestellt werden.

Die Herstellung eines elektrostatischen Halteelements kann aber auch so erfolgen, dass ein mit einer elektrisch leitenden Beschichtung versehenes plattenförmiges Element aus einem Glas oder einer elektrisch leitenden Keramik mit einem weiteren dielektrischen plattenförmigen Element zuerst miteinander, in der vorab beschriebenen Form verbunden werden. Dieser Verbund kann dann anschließend mit einem Trägerelement in analoger Weise verbunden werden.

Wird Silicium eingesetzt, sollte vor dem eigentlichen Fügen eine geringfügige Oxidation an der entsprechenden Oberfläche, als Voraussetzung für ein optimales direktes Fügen, erfolgen. Die Oxidschicht kann wenige Nanometer dick sein. Sie kann durch Ätzen leicht geöffnet und/oder entfernt werden, was für die Herstellung der elektrisch leitenden Verbindung zu einer elektrischen Spannungsquelle günstig ist.

Die Fügeverbindung kann ohne Zusatzstoffe oder elektrische Felder hergestellt werden. Da keine Zusatzstoffe in Fügebereichen eingesetzt werden müssen und/oder sich dort keine wesentlichen Veränderungen des Werkstoffs ergeben, ist dies für transmissive optische Anwendungen günstig, da keine zusätzlichen Grenzflächen und/oder Veränderungen des optischen Brechungsindex auftreten.

Vorteilhaft sollten alle Durchbrechungen und/oder Aussparungen so miteinander verbunden sein, dass ein Druckausgleich im gefügten Zustand des Leichtbaustrukturelements ermöglicht wird.

Mindestens eine Oberfläche kann mit einer reflektierenden Beschichtung versehen oder mindestens eine Deckplatte kann für elektromagnetische Strahlung vollständig oder teilweise reflektierend sein. So kann ein optischer Spiegel, ein Strahlteiler für optische Anwendungen geschaffen werden. Ein Einsatz erfindungsgemäß hergestellter Leichtbaustrukturelemente kann für optische Präzisionsaufbauten in Laseranwendungen, z.B. Laser-Resonatoren, als optische Bank oder für optische Komponenten im Weltraum erfolgen.

Nachfolgend soll die Erfindung beispielhaft näher erläutert werden.

Dabei zeigen:
Figur 1 in einer perspektivischen Explosionsdarstellung zwei Deckplatten und ein Trägerelement, die zu einem Leichtbaustrukturelement gefügt werden sollen;
Figur 2 eine perspektivische Darstellung eines Beispiels eines Trägerelements;
Figur 3 einen Aufbau zum Fügen eines Leichtbaustrukturelements;
Figur 4 ein Leichtbaustrukturbauelement mit strukturierten Deckplattenoberflächen;
Figur 5 ein weiteres Beispiel eines Leichtbaustrukturbauelements mit strukturierten Deckplattenoberflächen;
Figur 6 ein Beispiel eines Leichtbaustrukturbauelements mit sphärisch gewölbter Oberfläche;
Figur 7 in schematischer Form ein elektrostatisches Halteelement, als eine Ausführung eines Leichtbaustrukturelements;
Figur 8a in einer Schnittdarstellung ein Beispiel für ein erfindungsgemäß hergestelltes Leichtbaustrukturelement mit einseitig periodischer Gitterstruktur an einer Deckplatte;
Figur 8b ein weiteres Beispiel mit feiner Gitterstruktur für diffraktive Anwendungen;
Figur 8c ein weiteres Beispiel mit grober Gitterstruktur für mechanische Anwendungen und
Figur 9 in einer Schnittdarstellung ein Beispiel für ein erfindungsgemäß hergestelltes Leichtbaustrukturelement mit zusätzlichen optischen Elementen zur Strahlführung/-umlenkung.

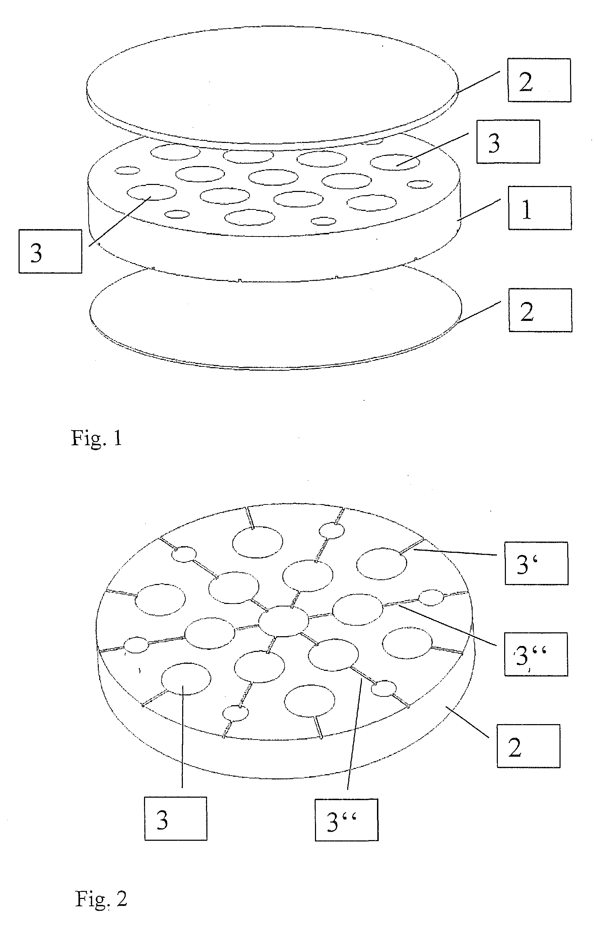

In Figur 1 sind in einer Explosionsdarstellung zwei Deckplatten 2, die mit einem Trägerelement 1 verbunden werden sollen, gezeigt. Durch das Trägerelement 1 sind Bohrungen, als Durchbrechungen 3 von einer Stirnseite bis zur gegenüberliegenden Stirnseite geführt. An diesen Stirnflächen bilden die Zwischenräume zwischen den Durchbrechungen 3 Fügebereiche. Die Dimensionierung der Durchbrechungen 3, deren Anzahl und deren Anordnung kann gemäß der gewünschten mechanischen Festigkeit und Steifheit gewählt und beispielsweise vorab berechnet werden.

Die zum Fügen genutzten Oberflächen des Trägerelements 1 und der beiden Deckplatten 2 sind bei diesem Beispiel eben und planar. Die gezeigte rotationssymmetrische Form der Deckplatten 2 und des Trägerelements 1 ist nicht zwingend erforderlich, bietet aber günstige Voraussetzungen für die Herstellung und den Einsatz.

Wie aus der Darstellung ersichtlich, ist die Dicke des Trägerelements 1 erheblich größer als die Dicke der Deckplatten 2. Die Deckplatten 2 müssen nicht gleich dick sein. Sie erhöhen nach dem erfindungsgemäßen Fügeprozess die mechanische Festigkeit und Steifheit des so hergestellten Leichtbaustrukturelements erheblich.

Aus der Darstellung von Figur 2 wird ersichtlich, dass die Durchbrechungen 3 im Trägerelement 1 mittels weiteren Kanälen 3" untereinander und zusätzlich mit der Umgebung verbunden werden können. Die Kanäle 3" können quer/senkrecht zu den Durchbrechungen 3 durch das Trägerelement 1 geführte Bohrungen sein, die hier sternförmig ausgebildet sind.

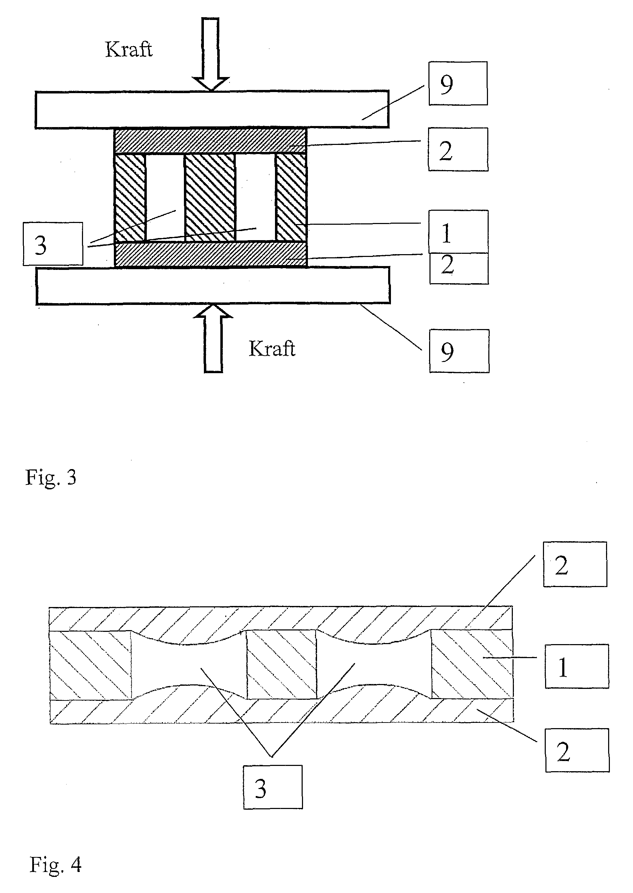

Mit Figur 3 soll die Herstellung des Leichtbaustrukturelements verdeutlicht werden. Dabei wird zunächst eine Deckplatte 2 mit dem Trägerelement 1 an gegenüberliegenden Stirnflächen gefügt. Die Deckplatten 2 und das Trägerelement 1 sind aus Kieselglas (fused silica) mit guten optischen Eigenschaften hergestellt worden. Es besteht die Möglichkeit zunächst lediglich die erste Deckplatte 2 mit dem Trägerelement 1 zu verbinden, und diesen Verbund dann mit der zweiten Deckplatte 2 später zu verbinden. Dadurch können die Reinigung und Aktivierung der zu fügenden Oberflächen des Trägerelements 1 jeweils auf eine Seite beschränkt werden.

Die Deckplatten 2 haben eine Dicke von 1 mm und das Trägerelement 1 eine Dicke von 10 mm. Sie haben einen Durchmesser von 100 mm. Im Trägerelement 1 sind Durchgangsbohrungen als Durchbrechungen 3 ausgebildet.

Die zum Fügen genutzten Stirnflächen des Trägerelements 1 wurden u.a. durch Läppen und Polieren geglättet, so dass eine Ebenheit der Stirnflächen kleiner 1 µm und eine Rauheit von 0,8 nm RMS erreicht werden konnte. Bei den dünneren Deckplatten 2 reicht eine Ebenheit von 20 µm als maximaler Abstand zwischen minimalem und maximalem Wert des Oberflächenprofils (Peak to Valley) über eine Länge von 100 mm aus.

Die Durchbrechungen 3 können durch Bohren erhalten werden, was wegen der relativ geringen Dicke des Trägerelements 1 problemlos möglich ist. Die Ränder oder gebildeter Grat können durch Anfasen der Kanten und ggf. Ätzen mit Flusssäure einfach nachbearbeitet werden.

Im Anschluss an die mechanische Bearbeitung wird eine sorgfältige Reinigung mit Aceton und Isopropanol, sowie nachfolgend mit NH₄OH und H₂O₂ entsprechend dem bekanten RCA-Verfahren durchgeführt. Die in dieser Form vorgereinigten Teile (Deckplatten 2 und Trägerelemente 1) werden zum Fügen in eine ReinraumUmgebung der ISO-Klasse 3 gebracht und dort auf einem Rotationstisch eine Feinreinigung durchgeführt, indem alternierend 2%-ige Lösungen von NH₄OH und H₂O₂ über die rotierenden Fügeflächen gespült werden. Danach wird mit destilliertem Wasser gespült und gleichzeitig wird eine Schallwelleneinkopplung im Megahertzbereich durchgeführt. Die Oberflächen werden trocken geschleudert und im Anschluss daran wird bei einem Druck von 0,3 mbar über einen Zeitraum von 60 s eine Plasmabehandlung mit Stickstoff als Plasmagas, bei einer Leistung pro Fläche von 1 W/cm² durchgeführt. Unmittelbar im Anschluss daran wird eine Spülung mit destilliertem Wasser, bei gleichzeitiger Schallwelleneinkopplung im Megahertzbereich durchgeführt. Unmittelbar im Anschluss an eine Trocknung werden die Fügeflächen der miteinander zu verbindenden Elemente (Trägerelement 1 und Deckplatte(n) 2) zueinander justiert aufeinander gelegt und in berührenden Kontakt gebracht.

Die beiden aufeinander liegenden Teile (Deckplatte 2 und das Trägerelement 1) werden im zueinander justiert Zustand zwischen zwei Pressstempel 9 angeordnet und mit einer Druckkraft von 100 kPa beaufschlagt, wie dies mit den Pfeilen angedeutet ist. Dabei wird der Umgebungsdruck auf 10⁻³ mbar reduziert und es wird eine Erwärmung auf eine Temperatur von 250 °C durchgeführt.

Bei dieser Temperatur wird die Druckkraft mit der die beiden Teile zusammengedrückt werden, auf 1 MPa erhöht. Druckkraft und Temperatur werden über 4 h gehalten. Die Druckkraftwirkung kann dann aufgehoben, langsam abgekühlt und der Umgebungsdruck wieder auf Normaldruckniveau erhöht werden. Danach ist die Fügeverbindung zwischen den beiden Deckplatten 2 mit dem Trägerelement 1 mit ausreichender Festigkeit hergestellt.

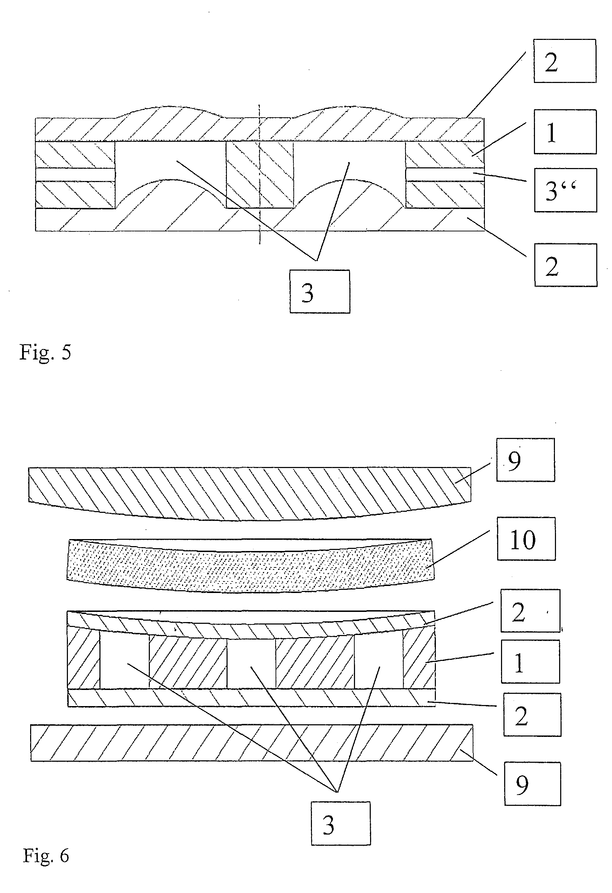

In den Figuren 4 und 5 sind Beispiele erfindungsgemäß hergestellter Leichtbaustrukturelemente gezeigt, bei denen Deckplatten 2 mit bereichsweise strukturierter Oberfläche mit dem Trägerelement 1 verbunden worden sind. Die Strukturelemente an den Deckplatten 2 sind sphärisch gewölbt, so dass sie optische Linsen bilden. Sie sind bei beiden gezeigten Beispielen in das Innere des Leichtbaustrukturelements weisend und im Bereich von Durchbrechungen 3 angeordnet. Mit der jeweiligen Anordnung und sphärischen Krümmung kann Einfluss auf die durch das Leichtbaustrukturbauelement geführte Strahlung genommen werden, da deren Brechung an den Grenzflächen entsprechend ausgenutzt werden kann.

In Figur 5 sind zusätzlich Kanäle 3" gezeigt, mit denen die mit den Durchbrechungen 3 gebildeten Hohlräume für einen Druckausgleich in Verbindung zur Umgebung gebracht werden können.

Die Explosionsdarstellung von Figur 6 zeigt, wie ein Leichtbaustrukturbauelement, bei dem eine Stirnfläche eines Trägerelements 1 und eine Deckplatte 2 spährisch gewölbt sein können. Die sphärische Wölbung erfolgt gemäß eines Sollradius. Bei der Herstellung kann zwischen die Pressstempel 9 eine elastische Matte 10 aus PTFE gelegt werden. Bei diesem Beispiel ist die Matte 10 lediglich zwischen einem Pressstempel 9 und der sphärischen Deckplatte 2 angeordnet. Es kann eine solche Matte 10 aber auch an beiden Seiten eingesetzt werden.

Auch beim Fügen des Beispiels nach Figur 5 sollte eine elastische Matte 10 eingesetzt werden, um die Druckkräfte gleichmäßig über die zu fügende Fläche verteilen zu können.

Bezüglich der Herstellung der Fügeverbindung wird auf das Vorgehen, wie es bei den Beispielen der Figuren 1 bis 3 beschrieben worden ist, hingewiesen.

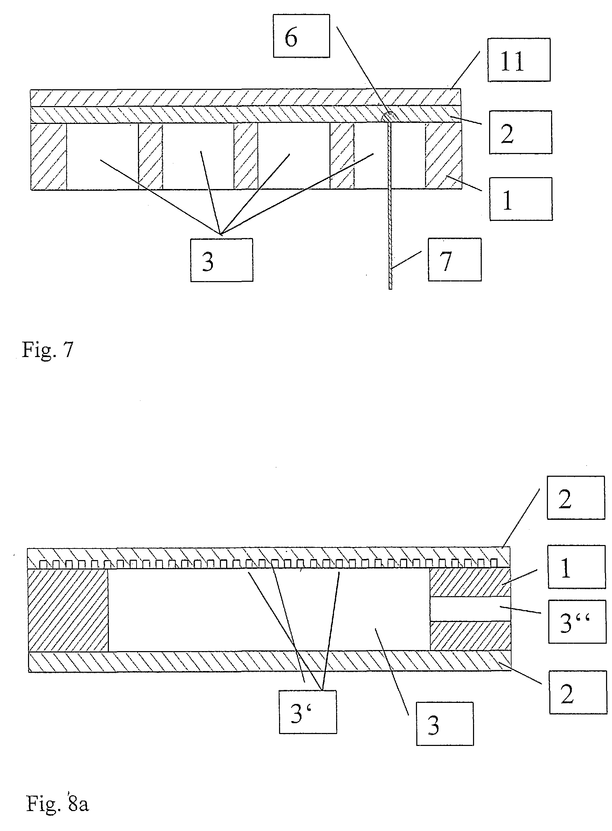

Figur 7 zeigt ein mit der Erfindung herstellbares elektrostatisches Haltelement. Dabei werden eine Deckplatte 2 und ein Trägerelement 1 aus Silicium direkt miteinander verbunden. Zumindest die Fügebereiche der Deckplatte 2 und des Trägerelements 1, in dem Durchbrechungen 3 ausgebildet sind, werden oxidiert, so dass dort an der Oberfläche eine dünne Siliciumoxidschicht ausgebildet ist, bevor das Fügen durchgeführt wird. Hierbei wird mit einer Druckkraft in Höhe von 1000 Pa gearbeitet. Die Wärmebehandlung wird bei einer Temperatur von 300 °C über eine Zeit von 2 h durchgeführt.

Die Deckplatte 2 kann vor oder nach dem Fügen mit dem Trägerelement 1 mit einem plattenförmigen Element 11 aus Glas mit einem thermischen Ausdehnungskoeffizient, der dem von Silicium zumindest annähernd entspricht, verbunden werden. Das Fügen kann dabei, wie vorab erläutert durchgeführt werden.

Im Anschluss kann die Oxidschicht der Deckplatte 2 in geeigneter Form zumindest an einer Position entfernt werden, um einen rückseitigen Anschlusskontakt 6, der mit einem elektrischen Leiter 7 zu einer elektrischen Spannungsquelle (nicht dargestellt) verbunden werden kann. Die Entfernung der Oxidschicht kann einfach mechanisch oder chemisch durch Ätzen erreicht werden.

In den Figuren 8a bis 8c sind mit der Erfindung herstellbare Beispiele von Leichtbaustrukturelementen gezeigt, die für mechanische Plattformen bzw. auch diffraktive Optikanwendungen geeignet sind.

In Figur 8a ist ein Beispiel gezeigt, bei dem an einer in das Innere weisenden Oberfläche einer Deckplatte 2 eine periodische Gitterstruktur ausgebildet ist. Diese kann mit entsprechend angeordneten und ausgerichteten Aussparungen 3' erreicht werden. Die Gitterstruktur kann aber auch mit anderen Mitteln an einer Deckplatte 2, beispielsweise durch strukturierte Beschichtung, ausgebildet werden.

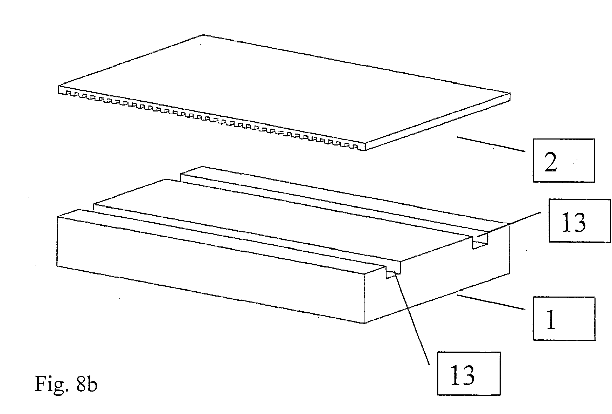

In Figur 8b ist gezeigt, wie mit kanalförmigen geraden Aussparungen 11 im Trägerelement 1, die Masse reduziert werden kann.

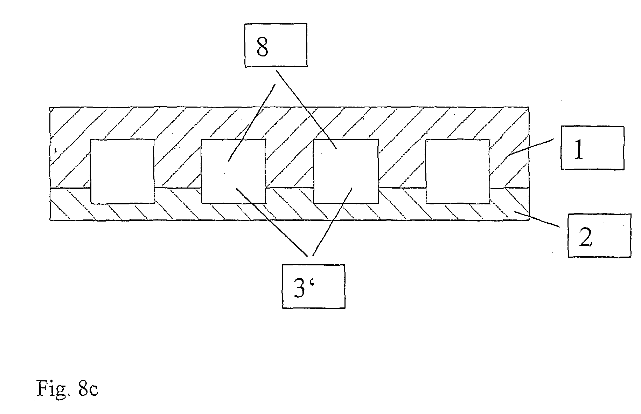

Beim in Figur 8c gezeigten Beispiel sind Aussparungen 3' an einer Deckplatte 2 und auch entsprechend komplementär dazu Aussparungen 8 am Trägerelement 1 ausgebildet. Die Aussparungen 3' und 8 sind dabei parallel zueinander und periodisch angeordnet.

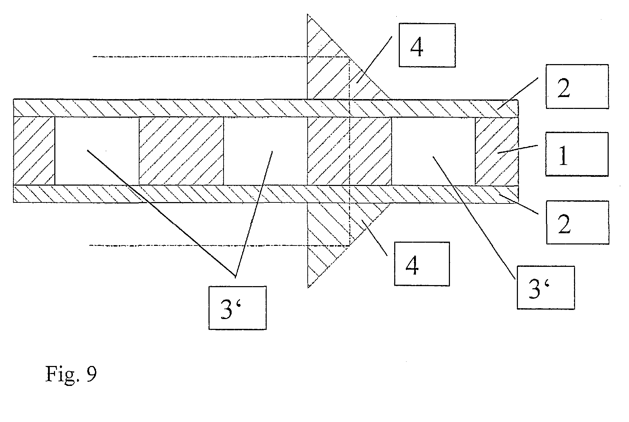

Figur 9 zeigt ein Leichtbaustrukturbauelement, wie es mit der Erfindung ebenfalls hergestellt werden kann.

Dabei sind zwei optische Prismen als zusätzliche optische Elemente 4 mit zwei Deckplatten 2 eines Leichtbaustrukturelements verbunden, wie es bereits für die Figuren 1 bis 3 beschrieben worden ist.

Die optischen Prismen 4 können mit den Deckplatten genau in der Form, wie es bereits für die Herstellung des Verbundes zwischen Deckplatte(n) 2 mit Trägerelement 1 erläutert worden ist, verbunden werden.

Mit der Strich-Punkt-Linie kann die Strahlführung von elektromagnetischer Strahlung, die mit einem solchen Leichtbaustrukturelement erreicht werden kann, verfolgt werden. Es kann, wie gezeigt eine Umkehr der Richtung von 360 ° erreicht werden. Mindestens ein optisches Prisma 4 kann auch als Strahlteiler ausgebildet sein. Hierfür kann eine Fläche mit einer dafür geeigneten Beschichtung versehen sein.

## Patentansprüche

1. Verfahren zur Herstellung von Leichtbaustrukturelementen, als Verbundbauteil von mindestens zwei Elementen, wobei ein Element ein Trägerelement (1), an dem mindestens eine Durchbrechung (3) und/oder mindestens eine Aussparung (3') ausgebildet ist, und mindestens ein weiteres Element eine Deckplatte (2) ist;
dabei ein Trägerelement (1) und mindestens eine Deckplatte (2) eingesetzt werden, die aus einem Glas, einer Glaskeramik, einer Keramik und/oder Silicium mit einer oxidischen Oberflächenschicht, die zumindest im Fügebereich der miteinander zu verbindenden Elemente ausgebildet ist, gebildet ist und
das Trägerelement (1) eine mindestens zweifache Dicke in Bezug zur Dicke einer Deckplatte (2) aufweist; bei dem
die Oberflächen der miteinander zu verbindenden Deckplatte(n) (2) und des Trägerelements (1) in ihren Fügebereichen intensiv gereinigt und so geglättet werden, dass dort eine Rauheit der Oberfläche erreicht wird, dass sie bei einer wirkenden Druckkraft mit mindestens 80 % ihrer Fügefläche in unmittelbarem berührenden Kontakt stehen und
dabei eine thermische Behandlung bei einer Temperatur von mindestens 200 °C und maximal 600°C und einem Halten der Temperatur über einen Zeitraum von mindestens 0,5 h durchgeführt wird, wobei während der Heizphase der thermischen Behandlung bis zum Erreichen der maximalen Fügetemperatur Druckkräfte ausgeübt werden, die bei maximal 50 % von den maximalen Druckkräften liegen und nach dem Erreichen der maximalen Temperatur der Druck auf den maximalen Druckwert erhöht wird, wobei der maximale Druckwert im Bereich 2kPa bis 5MPa beträgt,
um eine Fügeverbindung der Deckplatte(n) (2) und dem Trägerelement (1) herzustellen; wobei mindestens eine Deckplatte (2) mit einer Oberfläche des Trägerelements (1) verbunden wird, an der mindestens eine Öffnung einer Durchbrechung (3) oder einer Aussparung (3') angeordnet ist.

2. Verfahren nach Anspruch 1, **dadurch gekennzeichnet, dass** eine Glättung der Oberflächen im Fügebereich so durchgeführt wird, dass eine Ebenheit oder eine Abweichung der Oberfläche von einem Sollradius am Trägerelement (1), die kleiner als die Abweichung der Ebenheit oder von einem Sollradius der Deckplatte(n) (2) ist, erreicht wird und/oder die erforderliche Ebenheit mit steigender Dicke der jeweiligen Deckplatte (2) vergrößert oder die zulässige Abweichung der Oberfläche von einem Sollradius einer Deckplatte (2) mit steigender Dicke der jeweiligen Deckplatte (2) verringert wird.

3. Verfahren nach Anspruch 1 oder 2, **dadurch gekennzeichnet, dass** eine Glättung der Oberflächen im Fügebereich so durchgeführt wird, dass eine Ebenheit oder eine Abweichung der Oberfläche von Fügeflächen mit einem Peak to Valley Wert (PV), der dem Abstand zwischen einem höchsten und einem tiefsten Punkt einer Fläche, wenn diese Fläche durch eine Ausgleichsebene approximiert wird, bestimmt wird, besser als 1 µm PV über eine Fläche mit einem Durchmesser von 100 mm für Trägerelement (1) und/oder Deckplatte (2) mit einer Dicke > 5 mm, besser als 10 µm PV über eine Fläche mit einem Durchmesser von 100 mm für dünnere Trägerelemente (1) und/oder Deckplatten (2) mit einer Dicke < 5 mm und/oder besser als 40 µm PV über eine Fläche mit einem Durchmesser von 100 mm für Trägerelemente (1) und/oder Deckplatten (2) mit einer Dicke < 1 mm aufweisen.

4. Verfahren nach einem der vorhergehenden Ansprüche, **dadurch gekennzeichnet, dass** eine Reinigung durch alternierendes Spülen mit wässrigen NH₄OH-Lösung und H₂O₂-Lösung, mit einer jeweiligen Konzentration im Bereich 2% - 4%, ein anschließendes Spülen destilliertem oder de-ionisiertem Wasser unter gleichzeitiger Einwirkung von Schallwellen im Megahertzbereich und einem anschließendem Trocknen durchgeführt wird.

5. Verfahren nach einem der vorhergehenden Ansprüche, **dadurch gekennzeichnet, dass** im Anschluss an eine Reinigung eine Plasmabehandlung, mit Sauerstoff, Stickstoff, einem Edelgas oder einem Gasgemisch davon, bei Drücken im Bereich 0,01 mbar bis 100 mbar über einen Zeitraum von mindestens 10 s durchgeführt wird.

6. Verfahren nach Anspruch 5, **dadurch gekennzeichnet, dass** im Anschluss an die Plasmabehandlung ein Spülen destilliertem oder de-ionisiertem Wasser unter gleichzeitiger Einwirkung von Schallwellen im Megahertzbereich und einem anschließendem Trocknen durchgeführt wird.

7. Verfahren nach einem der vorhergehenden Ansprüche, **dadurch gekennzeichnet, dass** das Fügen bei einer Temperatur von mindestens 200 °C und maximal 600 °C durchgeführt wird und/oder eine Druckkraft im Bereich 2 kPa bis 1500 kPa, insbesondere im Bereich 300 kPa bis 700 kPa beim Fügen auf die miteinander zu fügenden Elemente ausgeübt wird.

8. Verfahren nach einem der vorhergehenden Ansprüche, **dadurch gekennzeichnet, dass** das Fügen bei Umgebungsdruck im Bereich kleiner 10 mbar und/oder einer wirkenden Druckkraft im Bereich 2 kPa bis 5 MPa durchgeführt wird.

9. Verfahren nach einem der vorhergehenden Ansprüche, **dadurch gekennzeichnet, dass** Elemente (1, 2, 4) miteinander verbunden werden, die aus einem Material, das ausgewählt ist aus Siliciumdioxid,
einem Glas oder einer Glaskeramik mit einem thermischen Ausdehnungskoeffizienten < 1 * 10⁻⁶/K im Temperaturbereich zwischen 50 K und 100 K oder bei Raumtemperatur,
einer Keramik, die ausgewählt ist aus Al₂O₃/Saphir, AlN, SiC, Y₃Al₅O₁₂, YVO₄, anderen Granaten sowie Vanadaten und nichtlinearen optischen Kristallen, hergestellt sind.

10. Verfahren nach einem der vorhergehenden Ansprüche, **dadurch gekennzeichnet**, mindestens eine Deckplatte (2) mit einer optisch wirksamen Oberflächenstruktur mit dem Trägerelement (1) und/oder mindestens ein optisches Element (4) mit mindestens einem Deckplatte (2) verbunden wird.

11. Verfahren nach einem der vorhergehenden Ansprüche, **dadurch gekennzeichnet, dass** eine in Richtung Trägerelement (1) weisende Oberfläche einer Deckplatte (2) bereichsweise mit einer elektrisch leitenden Beschichtung versehen und eine elektrisch leitende Verbindung (6, 7) zu dieser Beschichtung (5) für die Herstellung eines elektrostatischen Halteelements ausgebildet werden.

12. Verfahren nach einem der vorhergehenden Ansprüche, **dadurch gekennzeichnet, dass** ebene, planare oder komplementär sphärisch gewölbte Flächen eines Deckplatte (2) und eines Trägerelements (1) miteinander verbunden werden.

13. Verfahren nach einem der vorhergehenden Ansprüche, **dadurch gekennzeichnet, dass** mit geradlinigen Aussparungen (3' und/oder 8), die im Trägerelement (3) und/oder in der Deckplatte (2) ausgebildet sind, ein optisches Gitter hergestellt wird.

14. Verfahren nach einem der vorhergehenden Ansprüche, **dadurch gekennzeichnet, dass** bei miteinander verbundenen optisch transparenten Elementen (1, 2, 4) eine Transmission von mindestens 60 % im Wellenlängenbereich zwischen 110 nm und 11 µm eingehalten wird, und die Transmission mit der/den hergestellten Fügeverbindung(en) um maximal 5 % reduziert wird.

## Claims

1. A method of producing lightweight structure elements as a composite component of at least two elements, wherein one element is a carrier element (1) at which at least one aperture (3) and/or at least one cut-out (3') is/are formed, and at least one further element is a cover plate (2);
in this respect, a carrier element (1) and at least one cover plate (2) are used which are formed from a glass, a glass ceramic material, a ceramic material and/or silicon having an oxide surface layer which is formed at least in the bonding region of the elements to be connected to one another; and
the carrier element (1) has at least a double thickness with respect to the thickness of a cover plate (2); wherein
the surfaces of the cover plate(s) (2) and of the carrier element (1) to be connected to one another in bonding regions are intensely cleaned and are smoothed such that a roughness of the surface is reached there, that they are in direct touching contact with at least 80% of their bonding surfaces with an active compression force; and
in this respect a thermal treatment is carried out at a temperature of at least 200°C and a maximum of 600°C and a maintaining of the temperature over a period of at least 0.5 h, wherein compression forces are exerted during the heating phase of the thermal treatment up to the reaching of the maximum bonding temperature, said compression forces lying at 50% of the maximum compression forces, and the pressure is increased to the maximum compression value when the maximum temperature is reached, the maximum compression value lying in the range between 2 kPa to 5 MPa, to establish a bond connection of the cover plate(s) (2) and the carrier element (1); wherein at least one cover plate (2) is connected to a surface of the carrier element (1) at which at least one opening of an aperture (3) or of a cut-out (3') is arranged.

2. A method in accordance with claim 1, **characterized in that** a smoothing of the surfaces is carried out in the bonding region such that a planarity or a deviation of the surface from a desired radius at the carrier element (1) is achieved which is less than the deviation of the planarity or from a desired radius of the cover plate(s) (2) and/or the required planarity is increased as the thickness of the respective cover plate (2) increases or the permitted deviation of the surface from a desired radius of a cover plate (2) is reduced as the thickness of the respective cover plate (2) increases.

3. A method in accordance with claim 1 or claim 2, **characterized in that** a smoothing of the surfaces is carried out in the bonding region such that
a planarity or a deviation of the surface from bonding surfaces with a peak-to-valley value (PV) which is determined by the distance between a highest and a lowest point of a surface when this surface is approximated by a compensation plane comprises better than 1µm PV over a surface having a diameter of 100 mm for the carrier element (1) and/or the cover plate (2) with a thickness > 5 mm, comprises better than 10 µm PV over a surface having a diameter of 100 mm for thinner carrier elements (1) and/or cover plates (2) with a thickness < 5 mm and/or
comprises better than 40 µm over a surface having a diameter of 100 mm for carrier elements (1) and/or cover plates (2) with a thickness < 1 mm.

4. A method in accordance with one of the preceding claims, **characterized in that** a cleaning is carried out by alternate rinsing with aqueous NH₄OH solution und H₂O₂ solution having a respective concentration in the range 2% to 4%, by subsequent rinsing in distilled or deionized water with a simultaneous effect of sound waves in the megahertz range and a subsequent drying.

5. A method in accordance with one of the preceding claims, **characterized in that** subsequent to a cleaning, a plasma treatment with oxygen, nitrogen, a noble gas or a gas mixture thereof, is carried out at pressures in the range 0.01 mbar to 100 mbar over a period of at least 10 s.

6. A method in accordance with claim 5, **characterized in that** subsequent to the plasma treatment a rinsing is carried out in distilled or deionized water under the simultaneous influence of sound waves in the megahertz range and a subsequent drying.

7. A method in accordance with one of the preceding claims, **characterized in that** the bonding is carried out at a temperature of at least 200°C and a maximum of 600°C and/or a compression force is exerted on the elements to be bonded together in the range 2 kPa to 1500 kPa, in particular in the range 300 kPa to 700 kPa during the bonding.

8. A method in accordance with one of the preceding claims, **characterized in that** the bonding is carried out at an environmental pressure in the range smaller than 10 mbar and/or of an active compression force in the range 2 kPa to 5 MPa.

9. A method in accordance with one of the preceding claims, **characterized in that** elements (1, 2, 4) are connected to one another which are produced from a material which is selected from silicon dioxide,
a glass or a glass ceramic material having a thermal coefficient of expansion < 1 * 10⁻⁶/K in the temperature range between 50 K and 100 K or at room temperature,
a ceramic material which is selected from Al₂O₃/sapphire, AlN, SiC, Y₃Al₅O₁₂, YVO₄, other garnets as well as vanadates and non-linear optical crystals.

10. A method in accordance with one of the preceding claims, **characterized in that** at least one cover plate (2) having at least one optically effective surface structure is connected to the carrier element (1) and/or at least one optical element (4) is connected to at least one cover plate (2).

11. A method in accordance with one of the preceding claims, **characterized in that** a surface of a cover plate (2) facing in the direction of the carrier element (1) is provided at least in regions with an electrically conductive coating and an electrically conductive connection (6, 7) to the coating (5) is formed for the production of an electrostatic holding element.

12. A method in accordance with one of the preceding claims, **characterized in that** level or planar surfaces, or surfaces spherically arched in a complementary manner, of a cover plate (2) and of a carrier element (1) are connected to one another.

13. A method in accordance with one of the preceding claims, **characterized in that** an optical grid is produced with straight-line cut-outs (3' and/or 8) which are formed in the carrier element (3) and/or in the cover plate (2).

14. A method in accordance with one of the preceding claims, **characterized in that**, with mutually connected optically transparent elements (1, 2, 4), a transmission of at least 60% is observed in the wavelength range between 110 nm and 11 µm, and the transmission is reduced by a maximum of 5% using the produced bonding connection(s).

## Revendications

1. Procédé de fabrication d'éléments structurels de construction légère, en tant que composant composite constitué d'au moins deux éléments, un élément étant un élément porteur (1) sur lequel est constitué au moins un percement (3) et/ou au moins un évidement (3'), et au moins un autre élément étant un panneau de couverture (2) ;
un élément porteur (1) et au moins un panneau de couverture (2) étant utilisés, le panneau de couverture (2) étant formé de verre, de vitrocéramique, de céramique et/ou de silicium avec une couche superficielle obtenue par voie d'oxydation qui est constituée au moins dans la zone d'assemblage des éléments à raccorder l'un à l'autre, et
l'élément porteur (1) présentant une épaisseur au moins double par rapport à l'épaisseur d'un panneau de couverture (2) ; dans lequel
les surfaces du/des panneaux(x) de couverture (2) à raccorder l'un à l'autre et de l'élément porteur (1) sont nettoyées de façon intensive dans leurs zones d'assemblage et lissées de telle sorte que l'on obtient à cet endroit une rugosité de la surface telle que, pour une force de pression agissante, elles sont en contact contigu et direct par au moins 80 % de leur surface d'assemblage, et
un traitement thermique à une température d'au moins 200 °C et de 600 °C au maximum et avec un maintien de la température pendant une période d'au moins 0,5 h étant effectué, des forces de pression qui représentent au maximum 50 % des forces de pression maximales étant exercées pendant la phase de chauffage du traitement thermique jusqu'à l'obtention de la température d'assemblage maximale et, après l'obtention de la température maximale, la pression est augmentée à la valeur de pression maximale, la valeur de pression maximale se situant dans la plage de 2 kPa à 5 MPa, pour réaliser un raccordement d'assemblage du/des panneau(x) de couverture (2) et de l'élément porteur (1) ; au moins un panneau de couverture (2) étant raccordé à une surface de l'élément porteur (1) sur laquelle est disposée une ouverture d'un percement (3) ou d'un évidement (3').

2. Procédé selon la revendication 1, **caractérisé en ce qu'**un lissage des surfaces dans la zone d'assemblage est effectué de telle sorte qu'une planéité ou un écart de la surface à un rayon de consigne sur l'élément porteur (1) qui est inférieur(e) à l'écart de la planéité ou à un rayon de consigne du/des panneau(x) de couverture (2) est obtenu(e), et/ou la planéité nécessaire est augmentée avec l'augmentation de l'épaisseur du panneau de couverture (2) respectif, ou l'écart admissible de la surface à un rayon de consigne d'un panneau de couverture (2) est diminué avec l'augmentation de l'épaisseur du panneau de couverture (2) respectif.

3. Procédé selon la revendication 1 ou 2, **caractérisé en ce qu'**un lissage des surfaces dans la zone d'assemblage est effectué de telle sorte que, avec une valeur de pic à creux (PV) qui est déterminée par la distance entre un point le plus haut et un point le plus bas d'une surface quand cette surface fait l'objet d'une approximation par un plan de compensation, une planéité ou un écart de la surface des surfaces d'assemblage présente une valeur meilleure que 1 µm PV sur une surface avec un diamètre de 100 mm pour l'élément porteur (1) et/ou le panneau de couverture (2) avec une épaisseur > 5 mm, meilleure que 10 µm PV sur une surface avec un diamètre de 100 mm pour des éléments porteurs (1) et/ou des panneaux de couverture (2) plus minces avec une épaisseur < 5 mm, et/ou meilleure que 40 µm PV sur une surface avec un diamètre de 100 mm pour des éléments porteurs (1) et/ou des panneaux de couverture (2) avec une épaisseur < 1 mm.

4. Procédé selon l'une des revendications précédentes, **caractérisé en ce qu'**il est effectué un nettoyage par un lavage alterné avec une solution NH₄OH aqueuse et une solution H₂O₂, avec une concentration respective dans la plage de 2 % à 4 %, par un lavage ultérieur avec de l'eau distillée ou déionisée sous l'action simultanée d'ondes acoustiques dans la plage des mégahertz suivie d'un séchage.

5. Procédé selon l'une des revendications précédentes, **caractérisé en ce que**, à la suite d'un nettoyage, il est effectué un traitement au plasma avec de l'oxygène, de l'azote, un gaz rare ou un mélange gazeux de ceux-ci, à des pressions dans la plage de 0,01 mbar à 100 mbar pendant une période d'au moins 10 s.

6. Procédé selon la revendication 5, **caractérisé en ce que**, à la suite du traitement au plasma, il est effectué un lavage avec de l'eau distillée ou déionisée sous l'action simultanée d'ondes acoustiques dans la plage des mégahertz suivie d'un séchage.

7. Procédé selon l'une des revendications précédentes, **caractérisé en ce que** l'assemblage est effectué à une température d'au moins 200 °C et de 600 °C au maximum, et/ou une force de pression dans la plage de 2 kPa à 1 500 kPa, en particulier dans la plage de 300 kPa à 700 kPa, est exercée sur les éléments à assembler l'un à l'autre lors de l'assemblage.

8. Procédé selon l'une des revendications précédentes, **caractérisé en ce que** l'assemblage est effectué à une pression ambiante dans la plage inférieure à 10 mbar et/ou en présence d'une force de pression active dans la plage de 2 kPa à 5 MPa.

9. Procédé selon l'une des revendications précédentes, **caractérisé en ce que** des éléments (1, 2, 4) sont raccordés les uns aux autres, qui sont fabriqués dans un matériau qui est sélectionné parmi l'oxyde de silicium, du verre ou de la vitrocéramique avec un coefficient de dilatation thermique < 1 * 10⁻⁶/K dans la plage de température entre 50 K et 100 K ou à la température ambiante, de la céramique qui est sélectionnée parmi Al₂O₃/saphir, AlN, Sic, Y₃Al₅O₁₂, YVO₄, d'autres grenats ainsi que des vanadates et des cristaux optiques non linéaires.

10. Procédé selon l'une des revendications précédentes, **caractérisé en ce qu'**au moins un panneau de couverture (2) est raccordé par une structure superficielle optiquement active à l'élément porteur (1), et/ou au moins un élément (4) optique est raccordé à au moins un panneau de couverture (2).

11. Procédé selon l'une des revendications précédentes, **caractérisé en ce qu'**une surface d'un panneau de couverture (2) dirigée vers l'élément porteur (1) est munie par secteurs d'un revêtement électriquement conducteur, et une liaison (6, 7) électriquement conductrice avec ce revêtement (5) est constituée pour la fabrication d'un élément de retenue électrostatique.

12. Procédé selon l'une des revendications précédentes, **caractérisé en ce que** des surfaces lisses, planes ou bombées de façon sphérique et complémentaire d'un panneau de couverture (2) et d'un élément porteur (1) sont raccordées les unes aux autres.

13. Procédé selon l'une des revendications précédentes, **caractérisé en ce qu'**un réseau optique est fabriqué avec des évidements (3' et/ou 8) qui sont constitués dans l'élément porteur (3) et/ou dans le panneau de couverture (2).

14. Procédé selon l'une des revendications précédentes, **caractérisé en ce que**, dans le cas d'éléments (1, 2, 4) optiquement transparents raccordés les uns aux autres, une transmission d'au moins 60 % est maintenue dans la plage de longueur d'ondes entre 110 nm et 11 µm, et la transmission avec la/les raccordement(s) d'assemblage fabriqué(s) est réduite de 5 % au maximum.
